# EUROPÄISCHE PATENTANMELDUNG

(11) **EP 4 105 541 A1**
(43) Veröffentlichungstag der Anmeldung: **21.12.2022**
(21) Anmeldenummer: 21020321.2
(22) Anmeldetag: 16.06.2021
(51) Int. Cl.: F17C 13/02, G01F 22/02, G01F 23/14, G01F 23/18, G01F 23/00

(54) **VERFAHREN UND VORRICHTUNG ZUM ERMITTELN EINES FÜLLGRADES EINES ETHINSPEICHERS**

(71) Anmelder: Linde GmbH, 82049 Pullach (DE)
(72) Erfinder: Steusloff, Ronald, Neukloster (DE)
(74) Vertreter: Lu, Jing

(57) **Zusammenfassung**

Die Erfindung betrifft ein Verfahren (200) zum Ermitteln eines Füllgrades eines Ethinspeichers (110), wobei der Ethinspeicher zumindest einen Druckbehälter (112, 114) mit einer porösen Masse und Aceton- und/oder Dimethylformamid-Füllung umfasst, umfassen ein Ermitteln (210) eines aktuellen Drucks und einer aktuellen Temperatur des Ethinspeichers (110), und ein Ermitteln (230) des Füllgrades von Ethin in dem Ethinspeicher (110) auf Basis der aktuellen Temperatur und des aktuellen Drucks unter Berücksichtigung von physikalischen und/oder chemischen Eigenschaften von Ethin und der Aceton- und/oder Dimethylformamid-Füllung. Ferner werden eine Vorrichtung (130) und ein Computerprogrammprodukt zur Durchführung eines solchen Verfahrens (200) vorgeschlagen.

## Beschreibung

Die Erfindung betrifft ein Verfahren sowie eine Vorrichtung zum Ermitteln eines Füllgrades eines Ethinspeichers.

### Hintergrund der Erfindung

Ethin, auch als Acetylen bezeichnet, wird in Speichern, z.B. Druckbehältern wie Flaschen bzw. Flaschenbündeln oder -trailern, aufbewahrt und zur Verwendung bereitgehalten. Typischerweise sind derartige Speicher mit Entnahmevorrichtungen, z.B. Ventile, Druckminderer, Manometer und dergleichen, ausgerüstet. Um eine unterbrechungsfreie Versorgung mit Ethin zu gewährleisten, ist es von entscheidender Bedeutung, rechtzeitig für Nachbestellung zu sorgen, wenn das in dem Speicher vorgehaltene Ethin zur Neige geht.

Herkömmlicherweise kann dazu ein zeitlicher Verbrauch und ein Restfüllstand des Speichers, z.B. anhand des durch ein Manometer angezeigten Drucks oder anhand einer Gesamtmasse des Speichers, geschätzt werden, so dass auf den Zeitpunkt der voraussichtlichen Entleerung des Speichers extrapoliert werden kann.

Diese Vorgehensweise ist jedoch naturgemäß relativ unpräzise, so dass Bedarf an einer verbesserten Bestimmung besteht.

### Offenbarung der Erfindung

Diese Aufgabe wird durch Verfahren und Vorrichtungen gemäß den unabhängigen Patentansprüchen gelöst. Vorteilhafte Ausgestaltungen und Weiterbildungen sind Gegenstand der abhängigen Patentansprüche sowie der nachfolgenden Beschreibung.

Die Erfindung macht sich eine im Vergleich zu der eingangs beschriebenen Vorgehensweise deutlich umfassendere und präzisere Datenerhebung zunutze, so dass eine genauere Vorhersage über den Zeitpunkt der Speicherentleerung möglich ist. Insbesondere werden physikalische und/oder chemische Eigenschaften des Ethins und des Speichers bei der Ermittlung berücksichtigt. Dadurch kann die Speicherkapazität optimal ausgenutzt werden, da keine so großen Sicherheitsmargen nötig sind, wie dies herkömmlicherweise der Fall ist. Insgesamt erhöht sich damit der wirtschaftliche Nutzen, der aus einer Ethincharge gegebenen Umfangs gezogen werden kann.

Im Einzelnen umfasst ein erfindungsgemäßes Verfahren zum Ermitteln eines Füllgrades eines Ethinspeichers, wobei der Ethinspeicher zumindest einen Druckbehälter mit einer porösen Masse und Aceton- und/oder Dimethylformamid-Füllung umfasst, ein Ermitteln eines aktuellen Drucks und einer aktuellen Temperatur des Ethinspeichers und ein Ermitteln des aktuellen Füllgrades von Ethin in dem Ethinspeicher auf Basis der aktuellen Temperatur und des aktuellen Drucks unter Berücksichtigung von physikalischen und/oder chemischen Eigenschaften von Ethin und der Aceton- und/oder Dimethylformamid-Füllung. Dadurch kann jeweils die unter den aktuellen Bedingungen maximal entnehmbare Menge Ethins ermittelt werden, so dass die Speicherkapazität des Ethinspeichers optimal ausgenutzt werden kann.

Insbesondere erfolgt das Ermitteln des aktuellen Füllgrades von Ethin in dem Ethinspeicher zusätzlich unter Berücksichtigung von physikalischen und/oder chemischen Eigenschaften der porösen Masse und/oder unter zusätzlicher Berücksichtigung des Ethinspeichertyps und/oder der geografischen Lage des Ethinspeichers und/oder der Wetterverhältnisse an der geografischen Lage des Ethinspeichers. Diese Einflussgrößen beeinflussen die maximal entnehmbare Ethinmenge zusätzlich, so dass ihre Berücksichtugung zu einer weiteren Steigerung der Ausnutzung der Speicherkapazität führt. Mit herkömmlichen Methoden ist eine derart präzise Berechnung des Füllgrades nicht möglich, so dass immer eine signifikante Restmenge Ethin im Speicher verbleiben muss, um Prozesse und Apparate vor einer Verunreinigung, beispielsweise durch das in dem Speicher verwendete Lösungsmittel, zu schützen.

Vorteilhafterweise umfassen die physikalischen und/oder chemischen Eigenschaften zumindest eine aus der Gruppe aus einer Löslichkeit und einem temperaturabhängigen Dampfdruck. Beispielsweise betragen der Dampfdruck von Ethin 43,36 bar bei 20 °C und 26,7 bar bei 0 °C; die Löslichkeit von Ethin bei 20°C in Aceton 27,9 g/kg bei 1,013 bar(a) Partialdruck und 689 g/kg bei 20,26 bar(a) Partialdruck; die Löslichkeit von Ethin bei 20 °C in Dimethylformamid 42,7 g/kg bei 1,013 bar Partialdruck und 593 g/kg bei 20,26 bar(a) Partialdruck, die Löslichkeit von Ethin bei 0 °C in Aceton 58,0 g/kg bei 1,013 bar(a) Partialdruck und in Dimethylformamid 77,3 g/kg bei 1,013 bar(a) Partialdruck. Diese Eigenschaften sind für die Evaluation der maximal entnehmbaren Ethinmenge besonders relevant. Beispielsweise ist die Löslichkeit von Ethin in dem jeweils verwendeten Lösungsmittel druck- und temperaturabhängig, so dass die Berücksichtigung dieser Größen in Kombination eine präzise Vorhersage über die Zusammensetzung eines Entnahmestroms ermöglicht. Abhängig von vorgebbaren Minimalspezifikationen bezüglich des Entnahmestroms kann dann der Füllgrad anwendungsspezifisch ermittelt werden. Beispielsweise kann vorgegeben sein, dass der Entnahmestrom maximal 1% Aceton enthalten darf. Auf Basis der berücksichtigten chemischen bzw. physikalischen Eigenschaften des Ethins und des Acetons, und insbesondere von Wechselwirkungen zwischen Ethin und Lösungsmittel bzw. poröser Masse, sowie von aktuellen Druck- und Temperaturwerten kann ermittelt werden, wie viel Ethin noch entnommen werden kann, bis der Anteil des Acetons an dem Entnahmestrom des Schwellwert erreicht. Dies entspricht dem aktuellen Füllgrad. Es ist hierbei zu beachten, dass der Füllgrad auch auf eine maximale Kapazität des Ethinspeichers bezogen sein kann.

In vorteilhaften Ausgestaltungen umfasst das Verfahren ferner ein Ermitteln eines Nutzungsprofils. Dabei ist es besonders vorteilhaft, wenn das Verfahren ein Berechnen eines zukünftigen Füllgrades auf Basis des Nutzungsprofils umfasst. Dadurch lässt sich eine Aussage über den voraussichtlichen Zeitpunkt der Speicherentleerung treffen.

Insbesondere können dazu ein Ermitteln einer zukünftigen Temperatur des Ethinspeichers und ein Berücksichtigen der zukünftigen Temperatur beim Berechnen des zukünftigen Füllgrades erfolgen. Dadurch wird die Ermittlung des Zeitpunkts der Speicherentleerung präziser bzw. zuverlässiger.

Das Verfahren kann ferner ein Durchführen einer Maßnahme umfassen, wenn der aktuelle Füllgrad und/oder der wie eben beschrieben ermittelte zukünftige Füllgrad einen vorgebbaren Schwellwert unterschreiten. Die Maßnahme umfasst dabei insbesondere zumindest eine aus der Gruppe aus einem Ausgeben einer Warnmeldung, einem Auslösen einer Ethinlieferung, einem Auffüllen des Ethinspeichers und einem Austauschen des Ethinspeichers. So kann rechtzeitig auf eine Speicherentleerung reagiert werden, so dass insbesondere eine im Wesentlichen nahtlose Übergabe an einen vollen Ethinspeicher realisiert werden kann, um Unterbrechungen in der Versorgung mit Ethin zu vermeiden.

Eine erfindungsgemäße Vorrichtung zum Ermitteln eines Füllgrades eines Ethinspeichers, wobei der Ethinspeicher zumindest einen Druckbehälter mit einer porösen Masse und Aceton- und/oder Dimethylformamid-Füllung umfasst, umfasst zumindest einen Druck- und einen Temperatursensor, die zur Erfassung von Druck bzw. Temperatur in dem Ethinspeicher und zur Ausgabe eines Druck- bzw. Temperatursignals eingerichtet sind, und eine Recheneinheit, die zur Ermittlung des aktuellen Füllgrades des Ethinspeichers auf Basis eines Druck- und eines Temperatursignals von den Druck- und Temperatursensoren und unter Berücksichtigung von physikalischen und/oder chemischen Eigenschaften von Ethin und der Aceton- und/oder Dimethylformamid-Füllung eingerichtet ist. Ferner kann die Vorrichtung Mittel umfassen, die die Vorrichtung zur Durchführung einer hierin beschriebenen vorteilhaften Ausgestaltung eines erfindungsgemäßen Verfahrens ertüchtigen. Die Vorrichtung ist damit im Wesentlichen zur Durchführung eines erfindungsgemäßen Verfahrens eingerichtet und profitiert somit sinngemäß entsprechend von den in Bezug auf das Verfahren erläuterten Vorteilen und umgekehrt.

Auch eine Implementierung von Ausgestaltungen des erfindungsgemäßen Verfahrens in Form eines Computerprogramms ist vorgesehen. Ein solches Computerprogramm umfasst Programmcode zur Ausführung eines entsprechenden Verfahrens, wenn der Programmcode auf einer Recheneinheit, insbesondere der Recheneinheit der erfindungsgemäßen Vorrichtung, abläuft. Das Computerprogramm kann in Form eines Computerprogrammprodukts mit darauf gespeichertem Programmcode bereitgestellt werden. Als Speichermedien eignen sich dabei grundsätzlich alle, insbesondere nichtflüchtige, maschinenlesbaren Medien, wie beispielsweise CD, DVD, Magnetband, Lochkarte, SSD, EEPROM, Flash-Speicher, USB-Speicher, HDD, Diskette, usw. Auch eine Bereitstellung in Form eines Downloads von einem Server oder einem Cloudspeicher kann gegebenenfalls vorteilhaft sein.

Im Folgenden werden weitere Vorteile und Merkmale der Erfindung anhand eines Ausführungsbeispiels unter Bezugnahme aud die beigefügte Zeichnung erläutert.

### Kurze Figurenbeschreibung

Figur 1 zeigt schematisch eine vorteilhafte Ausgestaltung einer Anordnung, wie sie im Rahmen der Erfindung genutzt werden kann.
Figur 2 zeigt eine vorteilhafte Ausgestaltung eines erfindungsgemäßen Verfahrens in stark vereinfachter Darstellung in Form eines Flussdiagramms.

### Ausgestaltung(en) der Erfindung

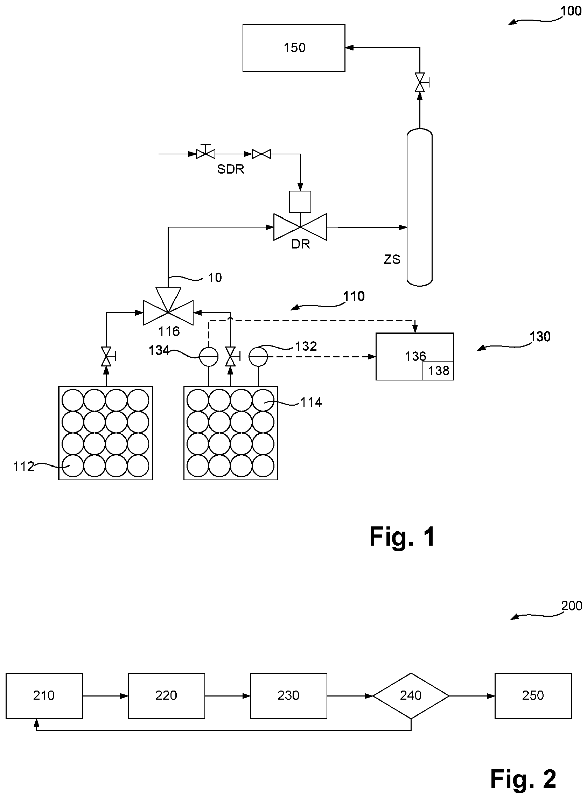

In Figur 1 ist eine Ausgestaltung einer Anordnung, wie sie im Rahmen der Erfindung genutzt werden kann schematisch dargestellt und insgesamt mit 100 bezeichnet.

Die Anordnung 100 umfasst eine Ethinspeichereinheit 110, die in dem dargestellten Beispiel zwei Ethinflaschenbündel 112, 114 aufweist. Jedes der Flaschenbündel umfasst beispielsweise 16 Einzelflaschen, wobei selbstverständlich auch andere Zahlen von Einzelflaschen und andere Anzahlen von Flaschenbündeln 112, 114 verwendet werden können. Über eine Umschalteinrichtung 116, beispielsweise ein Dreiwege-Kugelhahn, kann selektiv einem oder beiden der Flaschenbündel 112, 114 Ethin 10 entnommen werden. Das Ethin 10 kann über ein einen Druckminderer DR, der in dem gezeigten Beispiel über einen Steuerdruckregler SDR angesteuert wird und z.B. ein mechanisch, pneumatisch, hydraulisch oder elektrisch gesteuertes Ventil umfassen kann, an einen Verbraucher 150 geleitet werden. Zwischen Druckminderer DR und Verbraucher ist typischerweise eine Sicherheitseinrichtung ZS vorgesehen, die dazu eingerichtet ist, ein Fortsetzen einer eventuell stromab der Zerfallssperre einsetzenden Ethin-Zerfallsreaktion in die Speichereinheit 110 hinein zu verhindern.

Die Anordnung weist ferner eine Überwachungseinheit 130 auf, die zumindest einen Sensor 132, 134 umfasst, der bzw. die zur Erfassung von Temperatur- und Druckdaten der Speichereinheit 110 eingerichtet sind. Die Überwachungseinheit 130 umfasst zudem eine Recheneinheit 136, die dazu eingerichtet ist, unter Berücksichtigung von in einem Datenspeicher 138 abgelegten Informationen bezüglich chemischer und/oder physikalischer Eigenschaften von Ethin und/oder einem in der Speichereinheit 110 verwendeten Lösungsmittel und/oder einer in der Speichereinheit verwendeten porösen Masse, auf Basis der Temperatur- und Druckdaten einen Füllgrad des Speichers 110 an Ethin zu ermitteln. Insbesondere können die Informationen bezüglich der chemischen und/oder physikalischen Eigenschaften in Form von mathematischen Modellen oder Formeln, Nachschlagetabellen, Rechenvorschriften, Kennfeldern oder dergleichen abgelegt sein. Die Informationen können sich insbesondere auf Löslichkeit, Dampfdruckverhalten, Ad- und/oder Absorptionskoeffizienten und dergleichen der beteiligten Substanzen beziehen und insbesondere eine Temperatur- und/oder Druckabhängigkeit der jeweiligen Größe beinhalten.

In Figur 2 ist eine Ausgestaltung eines erfindungsgemäßen Verfahrens vereinfacht in Form eines Flussdiagramms dargestellt und insgesamt mit 200 bezeichnet. In der Beschreibung des Verfahrens 200 verwendete Bezüge auf eine Vorrichtungskomponente können sich insbesondere auf die Anordnung 100 aus Figur 1 beziehen.

Das Verfahren 200, das insbesondere von der Überwachungseinheit 130 durchgeführt werden kann umfasst in dem dargestellten Beispiel einen Erfassungsschritt 210, in dem Daten zu aktueller Temperatur und aktuellem Druck in dem Ethinspeicher 110 erfasst werden. Dazu können beispielsweise ein Drucksensor 132, der mit einem inneren Volumen des Ethinspeichers 110 verbunden ist, und ein Temperatursensor 134, der dazu eingerichtet ist, eine Temperatur des Ethinspeichers 110 oder von dessen direkter Umgebung zu erfassen, entsprechende Druck- bzw. Temperatursignale an die Recheneinheit 136 der Überwachungseinheit 130 senden. Die Überwachungseinheit 130 kann in einem Rechenschritt 220 auf Basis dieser Daten, insbesondere unter Berücksichtigung einer zeitlichen Entwicklung dieser Daten, ein Nutzungsprofil erstellen, aus dem ein zeitlicher Verlauf der Ethinentnahme aus dem Speicher 110 ableitbar ist. Auf Basis der Sensordaten bzw. des zeitlichen Verlaufs der Ethinentnahme kann die Recheneinheit in einem Ermittlungsschritt 230 einen aktuellen bzw. zukünftigen Füllgrad ermitteln. Beispielsweise kann bei der Ermittlung eines zukünftigen Füllgrads eine Zeitspanne berücksichtigt werden, die üblicherweise für eine Lieferung von frischem Ethin erforderlich ist. Ferner können bei der Ermittlung des zukünftigen Füllgrads auch weitere Daten, insbesondere von externen Datenquellen, mit einbezogen werden. Beispielsweise kann vorgesehen sein, dass Die Recheneinheit Wettervorhersagen für einen geographischen Standort des Ethinspeichers 110 von einem Wetterdienst abruft und die daraus hervorgehende voraussichtliche Temperatur- und/oder Druckentwicklung bei der Berechnung des zukünftigen Füllgrads berücksichtigt. Dabei ist zu betonen, dass beispielsweise mit steigender Temperatur der Druck in dem Ethinspeicher zunehmen wird, da typischerweise eine Löslichkeit von Ethin in dem verwendeten Lösungsmittel (z.B. Aceton oder Dimethylformamid) mit steigender Temperatur abnimmt. Dadurch kann bei erhöhten Temperaturen eine vollständigere Entnahme des in dem Ethinspeicher vorgehaltenen Ethins erzielt werden, als bei niedrigen Temperaturen, bei denen ein Partialdruck des Lösungsmittels in Relation zu einem Partialdruck des Ethins erhöht sein könnte. Mit anderen Worten ist die Temperatur ein entscheidender Faktor, der auf die Zusammensetzung der Gasphase und damit auf die nutzbare Speicherkapazität des Ethinspeichers wirkt.

Bei der Ermittlung des Füllgrads in Schritt 230 werden neben den Druck- und Temperaturdaten der Sensoren 132, 134 auch in dem Datenspeicher 138 abgelegte Informationen zum chemischen Verhalten, beispielsweise zu der bereits erwähnten Löslichkeit von Ethin in dem verwendeten Lösungsmittel, herangezogen. Der Datenspeicher 138 kann, wie in der Figur 1 dargestellt in der Recheneinheit 136 der Überwachungseinheit 130 integriert sein. Es kann jedoch auch ein separater Datenspeicher 138 vorgesehen sein, von dem Recheneinheit 136 bei Bedarf die entsprechenden Infarmationen abfragt. Dies ist insbesondere in Fällen vorteilhaft, in denen sich Informationen zu den entsprechenden Eigenschaften ändern können, beispielsweise wenn laufend unterschiedliche poröse Massen verwendet werden, oder unterschiedliche Lösungsmittel eingesetzt werden. In solchen Fällen kann es von Vorteil sein, beispielsweise an der Ethinspeichereinheit 110 einen entsprechenden Datenspeicher 138 anzubringen, der zusammen mit dem Speicher 110 ausgetauscht wird, so dass jeweils die für den individuellen Ethinspeicher 110 relevanten Daten verfügbar sind.

In einem Vergleichsschritt 240 des Verfahrens 200 wird schließlich der ermittelte Füllgrad mit einem Schwellwert verglichen, der insbesondere einen minimalen Füllgrad umfasst. Der Schwellwert kann beispielsweise eine minimale Füllmenge relativ zu einer auf Basis der aktuellen Sensordaten maximalen Speicherkapazität umfassen. Beispielsweise kann vorgesehen sein, dass der Speicher 110 maximal zu 95% entleert werden darf, um eine ungewünschte Lösungsmittelentnahme auf ein akzeptables Maß zu beschränken. Die Speicherkapazität ist jedoch aus den bereits erläuterten Gründen insbesondere temperaturabhängig, so dass bei hohen Temperaturen ggf. eine vollständigere Entleerung des Speichers möglich sein kann, als dies bei niedrigen Temperaturen der Fall ist. Mit anderen Worten kann ein festgelegter relativer Schwellwert zu einem variablen Absolutschwellwert führen, da die maximale Entnahmekapazität des Ethinspeichers z.B. mit steigender Temperatur zunimmt.

Wird in dem Vergleichsschritt festgestellt, dass der Schwellwert nicht unterschritten wird, so kann das Verfahren 200 zu Schritt 210 zurückkehren.

Wird in Schritt 240 hingegen ermittelt, dass der Schwellwert unterschritten wird, fährt das Verfahren mit einer Durchführung einer Maßnahme 250 fort. Die Maßnahme 250 kann insbesondere das Auslösen einer Ethinbestellung, ein Ausgeben einer Warnmeldung, ein Anordnen eines Austauschs des aktiven Ethinspeichers 112, 114 oder Ähnliches umfassen. Insbesondere wenn in Schritt 230 ein zukünftiger Füllgrad ermittelt wurde, ist es vorteilhaft, wenn die Maßnahme 250 eine Bestellung von Ethin derart auslöst, dass in dem zukünftigen Zeitpunkt, in dem der Schwellwert voraussichtlich unterschritten werden wird, genügend Ethin zum Auffüllen bzw. Austauschen des aktiven Speichers 112, 114 bereitstehen wird. Dadurch kann eine Lieferung von Ethin punktgenau erfolgen, so dass weder überschüssiges Ethin in dem zurückgegebenen Speicher 112, 114 verbleibt, noch eine Versorgungsunterbrechung durch zu späte Nachbestellung bzw. Lieferung verursacht wird.

## Patentansprüche

1. Verfahren (200) zum Ermitteln eines Füllgrades eines Ethinspeichers (110), wobei der Ethinspeicher zumindest einen Druckbehälter (112, 114) mit einer porösen Masse und Aceton- und/oder Dimethylformamid-Füllung umfasst, umfassend
Ermitteln (210) eines aktuellen Drucks und einer aktuellen Temperatur des Ethinspeichers (110),
Ermitteln (230) des Füllgrades von Ethin in dem Ethinspeicher (110) auf Basis der aktuellen Temperatur und des aktuellen Drucks unter Berücksichtigung von physikalischen und/oder chemischen Eigenschaften von Ethin und der Aceton- und/oder Dimethylformamid-Füllung.

2. Verfahren (200) nach Anspruch 1, wobei das Ermitteln (230) des Füllgrades von Ethin in dem Ethinspeicher (110) zusätzlich unter Berücksichtigung von physikalischen und/oder chemischen Eigenschaften der porösen Masse erfolgt.

3. Verfahren (200) nach Anspruch 1 oder 2, wobei das Ermitteln (230) des Füllgrades von Ethin in dem Ethinspeicher (110) zusätzlich unter Berücksichtigung des Ethinspeichertyps und/oder der geografischen Lage des Ethinspeichers (110) und/oder der Wetterverhältnisse an der geografischen Lage des Ethinspeichers (110) erfolgt.

4. Verfahren (200) nach einem der Ansprüche 1 bis 3, wobei die physikalischen und/oder chemischen Eigenschaften zumindest eine aus der Gruppe aus einer Löslichkeit und einem temperaturabhängigen Dampfdruck umfassen.

5. Verfahren (200) nach einem der Ansprüche 1 bis 4, ferner umfassend ein Ermitteln (220) eines Nutzungsprofils.

6. Verfahren (200) nach Anspruch 5, umfassend ein Berechnen (230) eines zukünftigen Füllgrades auf Basis des Nutzungsprofils.

7. Verfahren (200) nach Anspruch 6, umfassend ein Ermitteln einer zukünftigen Temperatur des Ethinspeichers (110) und Berücksichtigen der zukünftigen Temperatur beim Berechnen (230) des zukünftigen Füllgrades.

8. Verfahren (200) nach einem der vorstehenden Ansprüche, ferner umfassend ein Durchführen einer Maßnahme (250), wenn der aktuelle Füllgrad und/oder der gemäß Anspruch 6 oder 7 ermittelte zukünftige Füllgrad einen vorgebbaren Schwellwert unterschreitet (240).

9. Verfahren (200) nach Anspruch 8, wobei die Maßnahme (250) zumindest eine aus der Gruppe aus einem Ausgeben einer Warnmeldung, einem Auslösen einer Ethinlieferung, einem Auffüllen des Ethinspeichers (110) und einem Austauschen des Ethinspeichers (112, 114) umfasst.

10. Vorrichtung (130) zum Ermitteln eines Füllgrades eines Ethinspeichers (110), wobei der Ethinspeicher (110) zumindest einen Druckbehälter (112, 114) mit einer porösen Masse und Aceton- und/oder Dimethylformamid-Füllung umfasst, umfassend
zumindest einen Druck- (132) und einen Temperatursensor (134), die zur Erfassung von Druck und Temperatur in dem Ethinspeicher (110) und zur Ausgabe eines Druck-und Temperatursignals eingerichtet sind, und
eine Recheneinheit (136), die zur Ermittlung des Füllgrades des Ethinspeichers (110) auf Basis eines Druck- und eines Temperatursignals von den Druck- (132) und Temperatursensoren (134) und unter Berücksichtigung von physikalischen und/oder chemischen Eigenschaften von Ethin und der Aceton- und/oder Dimethylformamid-Füllung eingerichtet ist.

11. Vorrichtung (130) nach Anspruch 10, ferner umfassend Mittel, die die Vorrichtung zur Durchführung eines Verfahrens (200) nach einem der Ansprüche 1 bis 10 ertüchtigen.

12. Computerprogramm mit Programmcode zur Ausführung eines Verfahrens (200) nach einem der Ansprüche 1 bis 10, wenn der Programmcode auf einer Recheneinheit, insbesondere der Recheneinheit (136) der Vorrichtung (130) gemäß Anspruch 10 oder 11, abläuft.

13. Computerprogrammprodukt mit darauf gespeicherten Programmcode zur Ausführung eines Verfahrens (200) nach einem der Ansprüche 1 bis 10, wenn der Programmcode auf einer Recheneinheit, insbesondere der Recheneinheit (136) der Vorrichtung (130) gemäß Anspruch 10 oder 11, abläuft.
